# EUROPEAN PATENT APPLICATION

(11) **EP 4 012 844 A1**
(43) Date of publication of application: **15.06.2022**
(21) Application number: 21212900.1
(22) Date of filing: 07.12.2021
(51) Int. Cl.: H01R 13/502, H01R 13/52, H01R 13/58

(54) **CABLE SEALING PLUG FOR SEALING A CABLE OPENING OF AN ELECTRIC CONNECTOR WITH A COMPRESSION SEAL**

(30) Priority: 10.12.2020 DE 102020133029
(71) Applicant: TE Connectivity Germany GmbH, 64625 Bensheim (DE)
(72) Inventor: FISCHER, Carsten, 64625 Bensheim (DE); HILDMANN, Roman, 64625 Bensheim (DE); VEIHL, Maximilian, 64625 Bensheim (DE); ECKEL, Markus, 64625 Bensheim (DE)
(74) Representative: Grünecker Patent- und Rechtsanwälte PartG mbB

(57) **Abstract**

The invention relates to a cable sealing plug (1) for sealing a cable opening (7) of an electric connector (4), which electric connector (4) is adapted for connecting an electric cable (8) with a predetermined diameter (10). The cable sealing plug (1) is penetrated in an axial direction (A) with a cable pass through opening (12) through which the electric cable (8) may be inserted. Furthermore, the cable sealing plug (1) comprises a compression seal (14), which extends around the cable pass through opening (12) and which is convertible into a compressed state (16), in which an inner diameter (18) of the compression seal (14) is smaller than the predetermined cable diameter (10), and a locking part (20), which comprises a locking system (22) that is adapted to fix the cable sealing plug (1) to the connector (4) in a locking position (24), wherein the compression seal (14) and the locking part (20) are formed as a unitary component (26).

## Description

The invention relates to a cable sealing plug for sealing a cable opening of an electric connector adapted for connecting an electric cable with a predetermined cable diameter.

Electric cables are used in various applications from the low-voltage range to the high-voltage range for conducting current. By means of such an electric cable, power and/or information can be transmitted between two electric components. For connection of the electric cable to one of the electric components, the electric cable can be terminated in a housing of a connector. In order to prevent undesired media from entering the housing interior, which could cause a short circuit or contact failure, for example, the cable opening must be sealed. In the prior art, a sealing element is attached to the electric cable before it is inserted into the housing. However, moving the sealing element along the electric cable proves to be extremely laborious, particularly in the case of electric cables with large cable diameters, since the sealing element presses against the shell surface of the electric cable with a high sealing force in order to achieve the desired sealing effect.

The invention therefore aims to provide a solution with which a reliable sealing effect can be achieved with little assembly effort.

According to the invention, this aim is achieved by the above-mentioned cable sealing plug in that it has a cable pass through opening for the electric cable which penetrates the cable sealing plug in the axial direction. The cable sealing plug further comprises a compression seal which extends around the cable pass through opening and is transferable to a compressed state in which an inner diameter of the compression seal is smaller than the predetermined cable diameter, and a locking part which comprises a locking system adapted to fix the cable sealing plug to the plug. According to the invention, the compression seal and the locking part are united into one component.

Due to its large inner diameter, the cable sealing plug can be easily moved along the cable during assembly to achieve the required position. In a relaxed initial state, the compression seal presses only with a low sealing force on the shell surface of the cable or is even spaced apart from it. As a result, there is no or only slight static friction between the cable and the compression seal during the relative movement, which would otherwise damage the compression seal. If the compression seal is compressed, its inner diameter is reduced. This causes the compression seal to nestle against the shell surface of the cable and to press against this shell surface with a high sealing force. Since the cable sealing plug is positioned along the electric cable before the compression seal is compressed, it is possible to configure the compression seal such that a higher sealing force is achieved compared to prior art solutions. Namely, if the sealing element was already pressing against the shell surface of the electric cable with the full sealing force when the cable sealing plug was positioned, the sealing force would have to be low enough to allow the cable sealing plug to be displaced along the cable.

Consequently, by using the cable sealing plug according to the invention, not only the assembly can be facilitated, but also the sealing effect can be improved. With the higher sealing force, the vibration resistance is also increased, since the compression seal dampens the occurring vibrations.

The configuration of the locking part and the compression seal as a unitary component prevents any unwanted displacement of the relative position between the compression seal and the locking part, especially in the radial direction. Therefore, a contact surface between the compression seal and the locking part can be already precisely determined during manufacture and not only during assembly. Displacement of the contact surface is avoided, allowing an optimized configuration of the compression seal, since the deformation of the compression seal in the compressed state, in particular the direction of the displacement, can be predefined.

If the compression seal was not structurally united with the locking part, this compression seal would have to be positioned precisely in the housing before the locking part presses against the compression seal and transfers it to the compressed state. The positioning of the compression seal alone would require a lot of sensitivity, and the position of the compression seal could be displaced by simple vibrations, for example by the movement of the locking part. The compression of the compression seal and the resulting sealing effect would thus depend on the skills of the person assembling it. With the configuration according to the invention as a unitary component of the cable sealing plug, the relative position between the compression seal and the locking part is already predetermined and the compression seal can simply be inserted into the housing in one step with the locking part. Thus, the sealing effect of the cable sealing plug according to the invention is independent of the skills of the person assembling it.

Further preferred configurations of the device and the method are exemplarily explained below. The individual configurations can be combined independently of one another and are interchangeable independently of one another.

According to an exemplary configuration, the compression seal and locking part can be detachably connected to each other, for example via a form-fit connection. Here, detachably means that the compression seal and the locking part can be separated from each other without damaging one of the components. Alternatively, the compression seal and locking part can be non-detachably connected to each other, for example by a material closure. With a material closure, a resilient connection can be achieved between the compression seal and the locking part, which can prevent the compression seal from suddenly falling off or tearing away from the locking part.

In the unitary component, the compression seal and locking part can be connected to each other in at least one direction in a movement-transmitting manner so that, for example, a rotary movement of the locking part leads to a synchronous and simultaneous rotary movement of the compression seal. In particular, the compression seal and locking part can be connected to each other in all directions of movement in a movement-transmitting manner.

In order to improve the connection between the compression seal and the locking part, a form-fit connection can be formed between the compression seal and the locking part in addition to the material closure, for example in the form of a tongue-and-groove connection.

The unitary component can be an injection-molded part, which means that this component can be produced cost-effectively and with high precision, particularly in large quantities. The requirements for the compression seal and the locking part can be different. It is therefore particularly preferred if the compression seal and the locking part are formed from different materials. For example, the compression seal can be formed from an elastic or even rubber-elastic material and the locking part from a comparatively stiffer material. Thus, in the compressed state, the compression seal can nestle against the shell surface of the cable and better compensate for changes in the cable diameter and/or vibrations. The locking part, on the other hand, can generate a high pressing force on the compression seal and can withstand high mechanical loads, such as impact and/or shock loads.

The locking part can, for example, be formed from a metal. According to a preferred configuration, however, the locking part is formed from a plastic, for example a thermoplastic. Preferably, the unitary component may be molded in one process as a multi-component injection molded part.

If the compression seal is to be secured in the compressed state, it is in this case particularly preferred if the locking part is in the blocking position. Consequently, a constant pressing force can be generated by the locking part over the period of use without the locking part being pressed out of the housing.

The locking part can form an axial end of the cable sealing plug, which facilitates handling of the cable sealing plug. In the compressed state, the locking part can generate a pressing force from the axial end in the direction towards the compression seal, with which the compression seal is pressed against a housing wall, for example, at the end facing away from the locking part. As a result, the compression seal is axially compressed and the compression seal expands in the radial direction.

In order to achieve as uniform a pressing force as possible on the compression seal, the cable sealing plug can have a compression ring at an axial end of the cable sealing plug opposite the locking part, wherein the compression seal is located between the compression ring and the locking part. In particular, the compression seal can be located directly between the locking part and the compression ring. When inserted into the cable opening, the compression ring strikes a housing wall and presses against the compression seal with a pressing force distributed evenly along the compression ring. On the opposite side, the locking part presses against the compression seal so that the compression seal is axially compressed and the displaced material of the compression seal escapes radially inwards or outwards.

According to a further preferred configuration, at least one axially projecting shoulder can be located on a surface at which the locking part and the compression seal are connected to one another. The shoulder can be formed on the locking part, for example, with the shoulder projecting axially into the compression seal and forming a compression surface via which the pressing force is transmitted from the locking part to the compression seal.

At the end of the compression seal facing away from the locking part, the compression ring can be received in the axial direction in the compression seal, at least in sections, so that the compression seal is prevented from falling out.

The compression ring can, for example, be a separate component that is placed on the axial end of the compression seal facing away from the locking part. In this case, the press ring can be secured against falling out by means of a form fit. This makes it possible to easily replace the press ring or even provide different types of press rings with different axial lengths in a set, which may be more suitable depending on the application and can be interchanged with each other.

The press ring can, for example, be formed from an electrically conductive material, in particular a metal. In this configuration, the compression ring serves not only to compress the compression seal in interaction with the locking part, but also as an additional shielding element that can contact a cable shielding of the electric cable, for example, at least in the blocking position.

Alternatively, the press ring may be formed of an electrically insulating material. In this configuration, the housing in particular can be formed from an electrically conductive material so that the housing serves as a shielding element and the press ring secures the shield contact between the housing and the cable shielding.

In a particularly preferred configuration, the compression ring together with the compression seal and the locking part can be part of the unitary component. In particular, the compression ring can be non-detachably coupled to the compression seal, allowing the compression surface over which the pressing force of the compression ring acts on the compression seal to be fixed non-displaceably and with high precision during manufacture. For this purpose, the unitary component can, for example, be a product of a multi-component injection molding method.

If tilting of the compression seal during transfer to the compressed state is to be prevented, it is particularly preferred if the compression surface of the compression ring and the compression surface of the locking part are directly opposite each other with respect to the compression seal. Thus, in a top view, the compression surfaces can overlap essentially parallel to the axial direction, at least in sections, and the pressing forces are arranged essentially antiparallel to each other in the compressed state.

In order to change the inner and/or outer diameter of the compression seal to a greater extent than in the relaxed state when it is transferred to the compressed state, the compression seal can have at least one radially projecting pressure bead on its radial inner and/or outer surface.

Thus, for example, a radially inwardly projecting pressure bead can be provided which directly adjoins the locking part in the axial direction, in particular the compression surface of the locking part. If a compression ring is present, then the radially inwardly projecting pressure bead is preferably arranged in the axial direction, directly between the compression surfaces of the locking part and the compression ring.

Alternatively or additionally, the compression seal can have a radially outwardly projecting pressure bead, the outer diameter of which increases at least in the compressed state. Thus, in the compressed state, the radially outwardly projecting pressure bead can be pressed against an inner wall of the housing that delimits a seal receptacle in the radial direction. In the relaxed, non-compressed state, the radially outwardly projecting pressure bead can have an outer diameter that is smaller than the inner diameter of the seal receptacle, so that when the compression seal is inserted into the seal receptacle, the compression seal does not get caught on the inner wall that delimits the seal receptacle in the radial direction. Another advantage of the radially outwardly protruding pressure bead is that a single compression seal seals not only the area between the electric cable and the cable sealing plug, but also the area between the cable sealing plug and the housing, which enables a particularly compact design.

The pressure bead can, for example, have at least one sealing lip that presses against the shell surface of the cable in the compressed state. Preferably, the pressure bead can have several sealing lips arranged next to each other in the axial direction so that in the compressed state the pressure bead presses against the shell surface of the cable or against the inner wall of the housing at several points spaced apart from each other in the axial direction.

According to a further preferred configuration, a shell surface of the cable sealing plug can be formed at least in sections by the locking part and the compression seal. If the cable sealing plug has a compression ring, the compression ring can also form a section of the shell surface in a preferred configuration. This allows a compact design and the shell surfaces of the individual components can be used for individual tasks. For example, the compression seal can also seal an area radially outwards.

In order to reduce the size of the cable sealing plug, the locking part can have the locking system on its shell surface. This prevents unnecessary axial elongation of the locking part. In particular, the locking part may be inserted into the cable opening with the locking system engaging a complementary locking system disposed on an inner wall of the cable opening. By inserting the locking part into the cable opening, it does not protrude very far or even at all from the cable opening, at least in the blocking position. Therefore, the space required by the plug in the assembled state is reduced.

For smaller cable diameters, a very large sealing force is not required. Therefore, in such applications, it is possible for the locking system and complementary locking system to engage with each other by means of a latching and/or snapping mechanism. For example, the locking system can have at least one latching tab that engages the complementary locking system in the blocking position.

However, if the application requires a high sealing force, for example due to a large cable diameter as is common in high-voltage applications, it is particularly preferred if the effort required to transfer the compression seal to the blocked position and to secure the locking part in the blocking position is minimized as far as possible. For this purpose, the locking system can have a link guide by means of which a rotary movement of the cable seal plug is converted into an axial movement. The locking system can be adapted, for example, as an external thread which forms a screw connection with the complementary locking system.

Preferably, the locking system and the complementary locking system can form a bayonet lock. For this purpose, one of the two locking systems can be provided with the sliding guide and the other locking system can be provided with a radially projecting slide block that can be received in the sliding guide. In contrast to a screw connection, the blocking position of the bayonet lock is exactly predetermined. Consequently, with a bayonet lock, the sealing force achieved can already be specified independently of the assembly. This is particularly preferred in applications where a minimum sealing force is to be ensured. In the case of a simple screw connection, for example, it can be assumed that a threshold point of the screw connection intended for this purpose has already been reached before the compression required for the minimum sealing force is reached.

For better handling of the cable sealing plug, the locking part can be provided with at least one handling area on its end face facing away from the compression seal. This handling area can be adapted to facilitate an engagement by hand or a tool. For example, the handling area can be adapted as a depression or elevation.

The handling area can also serve for orientation and, for example, signal the locking direction by increasing the handling area along the locking direction in the axial and/or radial direction. This has the further advantage that locking is facilitated, however accidental unlocking can be avoided. In the opposite direction to the locking direction, the area of the handling area is smaller, which means that, for example, the impact of an external object on the handling area has no or at least little effect on the rotational position of the cable seal plug.

The compression ring can be particularly configured to fix the cable shielding of the electric cable in the housing. For this purpose, the compression ring can have an extension projecting away from the compression seal in the axial direction. At least in the blocking position, the extension can press the cable shielding against a housing wall or a shielding plate so that the cable shielding is clamped between the extension and the housing wall or shielding plate. Consequently, the extension improves the vibration resistance of a shielding contact.

In another example, at least the extension or even the entire compression ring can serve as a shielding element and be formed from an electrically conductive material.

In a particularly compact cable sealing plug, an outer diameter of the cable sealing plug may decrease in the direction from the locking part toward the compression seal. For example, the locking part may have an outer diameter that is larger than the outer diameter of the compression seal. If a compression ring is present, its outer diameter may in particular be smaller than the outer diameter of the compression seal.

The invention further relates to an electric connector comprising a housing having a cable opening and a cable sealing plug according to one of the preceding configurations. The housing may be provided with a locking system complementary to the locking system of the cable sealing plug for fixing the cable sealing plug in the blocking position in the housing, wherein in the blocking position the compression seal is pressed against an inner wall of the seal receptacle.

In this case, the compression seal can be pressed directly or also indirectly via the press ring against the inner wall of the seal receptacle, in particular an inner wall opposite the locking system with respect to the compression seal.

Preferably, the compression seal is in the compressed state in the blocking position so that the compression seal is secured in this compressed state and relaxation of the compression seal is prevented.

Lack of space is a major problem in many applications. It is therefore particularly preferred if the electric connector is adapted to be as compact as possible. An increase in the size of the electric connector due to the cable sealing plug can be prevented, for example, by the cable sealing plug being located completely in the housing at least in the blocking position or, in particular, only in the blocking position. Thus, the cable sealing plug does not protrude from the housing in the axial direction in the blocking position.

For easier handling, the cable sealing plug can terminate with one end of the housing in the blocking position. Thus, the cable sealing plug, especially the handling area, can be reached easily and it is not necessary to reach into the cable opening to operate the cable sealing plug.

According to a further preferred configuration, the housing may comprise a seal receptacle in which the compression seal is received at least in the blocking position. The seal receptacle can be adjacent in the axial direction to a blocking area of the cable opening provided with the complementary locking system, wherein the blocking area has an inner diameter that is larger than an inner diameter of the seal receptacle.

Preferably, in the relaxed state, the compression seal can have an outer diameter that is smaller than the inner diameter of the seal receptacle so that the compression seal can be guided into the seal receptacle without frictional resistance. In the compressed state, the outer diameter of the compression seal can be larger than the inner diameter of the seal receptacle in particular. The compression seal therefore presses with a sealing force against the inner wall delimiting the seal receptacle in the radial direction and thus achieves a sealing effect in the axial direction.

In order to prevent fluids from entering the seal receptacle, the compression seal can, in an optional configuration, have a radially outwardly projecting collar which, in the blocking position, is pressed axially against a shoulder forming a transition between the blocking area and the seal receptacle. In particular, the collar can be clamped in the blocking position in the axial direction between the shoulder and the locking part.

In a particularly preferred embodiment, the housing may have an annular pocket into which the compression ring or compression seal projects at least in sections in the blocking position. The pocket can, for example, receive the cable shielding and the part of the compression ring or the compression seal projecting into the pocket can press the cable shielding against a wall of the pocket or a shielding plate arranged in the pocket. Consequently, the cable shielding can be fixed in the pocket.

In order to reduce the installation effort, the pocket can be arranged radially on the inside. This facilitates in particular the positioning of the cable shielding in the pocket.

A connector arrangement can comprise an electric connector of the aforementioned type and an electric cable with a predetermined cable diameter.

The invention is exemplarily described in more detail below by way of embodiments. In accordance with the above explanations, features of the embodiments can be omitted if the technical effect associated with these features is not important for a particular application. Conversely, further features can also be added to the embodiments if their technical effect should be important for a particular application.

In the following, the same reference signs are used for features that correspond to each other in terms of function and/or spatial/physical configuration.

In the drawings:
- Fig. 1: shows a schematic perspective view of an exemplary configuration of a cable sealing plug according to the invention;
- Fig. 2: shows a schematic sectional view of a connector assembly comprising the cable sealing plug shown in Fig. 1 in a relaxed state;
- Fig. 3: shows a schematic perspective view of the connector arrangement of Fig. 2 in a blocking position; and
- Fig. 4: shows a schematic sectional view of the connector arrangement shown in Fig. 3.

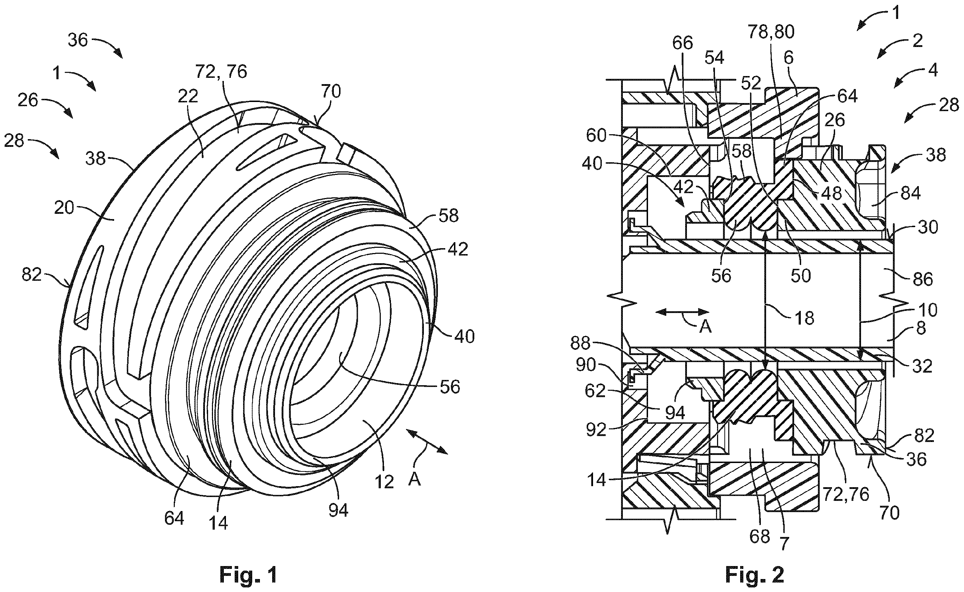

Now, with reference to Figs. 1 to 4, an exemplary configuration of a cable sealing plug 1 according to the invention, as well as a connector arrangement 2 comprising a connector 4 having a housing 6 provided with a cable opening 7, the cable sealing plug 1 and an electric cable 8 having a predetermined cable diameter 10 will be explained in more detail.

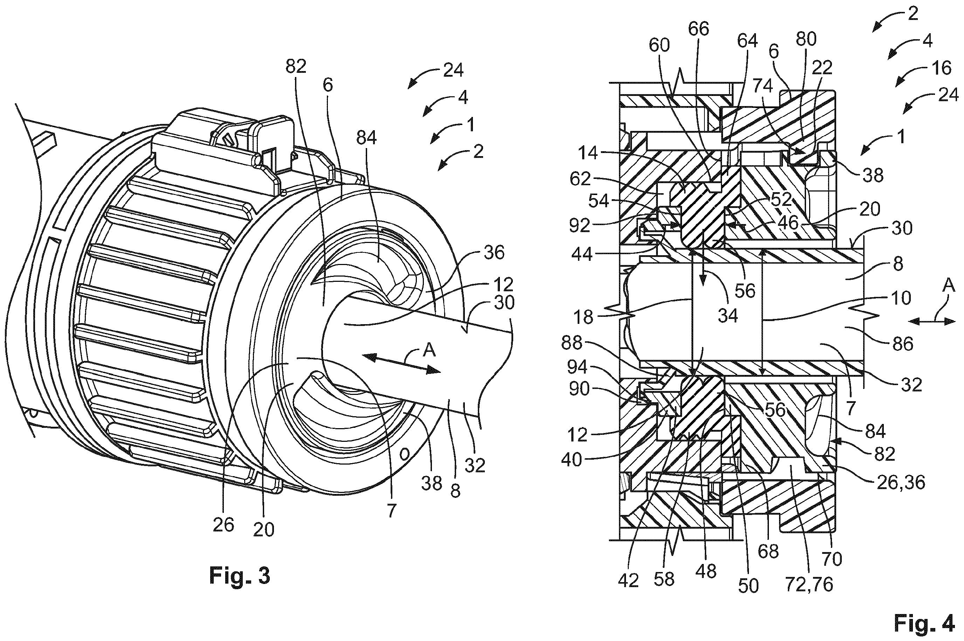

The cable sealing plug 1 is penetrated in axial direction A by a cable pass through opening 12, through which the electric cable 8 can be inserted. Further, the cable sealing plug 1 comprises a compression seal 14 extending around the cable pass through opening 12 and being transferable to a compressed state 16 (see Fig. 4) in which an inner diameter 18 of the compression seal 14 is smaller than the predetermined cable diameter 10, and a locking part 20 having a locking system 22 adapted to fix the cable sealing plug 1 to the connector 4 in a blocking position 24 as shown in Figs. 3 and 4.

In order to prevent an unintentional displacement of the relative position of compression seal 14 and locking part 20 and to reduce the dependence of the sealing effect on the assembly skills of an assembling person, compression seal 14 and locking part 20 are united into one component 26. This structural combination allows the contact surface between compression seal 14 and locking part 20 to be defined during manufacture.

In a relaxed state 28, as shown in Fig. 2, the inner diameter 18 may in particular be larger than the predetermined cable diameter 10. As a result, the cable sealing plug 1 can be moved with ease in the axial direction A along the cable during assembly without creating static frictional forces between the compression seal 14 and the electric cable 8, which may cause damage to the compression seal 14.

If the compression seal is now compressed or transferred to the compressed state 16, the compression seal 14 compresses in axial direction A and the inner diameter 18 is reduced. Therefore, the compression seal 14 nestles against a shell surface 30 of the electric cable 8, which is mostly formed by an insulation 32, and presses against this shell surface 30 with a high sealing force 34.

In the unitary component 26, the compression seal 14 and the locking part 20 may, in particular, be non-detachably connected to one another, for example by means of a material closure. Thus, the unitary component 26 may be an injection-molded part 36 that has been produced, for example, by a multicomponent injection molding process. A multi-component injection molding process is particularly suitable if the locking part 20 and the compression seal 14 are to be made of different materials. For example, the compression seal 14 can be molded from an elastic or even rubber-elastic material and the locking part 20 from a comparatively stiffer material.

The locking part 20 may form an axial end 38 of the cable sealing plug 1. As can be seen in this exemplary configuration, an axial end 40 of the cable sealing plug 1 opposite the axial end 38 may be formed by a compression ring 42. The compression ring 42 may abut a side of the compression seal 14 remote from the locking part 20, and allows a uniform compression force to be applied to the compression seal 14. A pressing force 44 may be applied to the compression seal 14 via the compression ring 42, and the pressing force 44 may be directed opposite to a pressing force 46 of the locking part 20. Consequently, the compression seal 14 can be compressed uniformly in axial direction A, as schematically indicated in Fig. 4.

The compression ring 42 can be formed from an electrically conductive material, whereby the compression ring 42 also serves as a shielding element in the connector arrangement 2. In particular, the compression ring 42 can be configured as a separate component that can be detachably connected to the compression seal 14.

Preferably, however, the compression ring 42 may be part of the unitary component 26 as shown in the exemplary configuration. For example, the compression ring 42 may be formed as a component of a multi-component injection molded part. Thus, in particular, the compression ring 42 may be formed from the same material as the locking part 20.

As can be seen in particular in the sectional views in Figs. 2 and 4, there can be at least one projecting shoulder 50 on a surface 48 where the locking part 20 and the compression seal 14 are connected to one another. In this exemplary configuration, the shoulder 50 is formed on the locking part 20 and it projects into the compression seal 14 in the axial direction A. Thereby, the shoulder 50 forms a pressing surface 52 via which the pressing force 46 acts on the compression seal 14.

At the end of the compression seal 14 facing away from the locking part 20, the compression ring 42 can be received at least in sections in the axial direction A in the compression seal 14, wherein a pressing surface 54 is also formed here which is directly opposite the pressing surface 52 with respect to the compression seal 14. Consequently, the compression seal 14 can extend directly between the pressing surfaces 52, 54 in axial direction A and it can be ensured that the pressing forces 44, 46 are arranged essentially parallel or antiparallel to one another.

As can be seen in the exemplary configuration, the compression seal 14 may include a radially inwardly projecting pressure bead 56 located directly between the pressing surfaces 52, 54 in the axial direction A. The inwardly projecting pressure bead 56 represents the part of the compression seal 14 which surrounds the cable pass through opening 12 and which, in the compressed state 16, is compressed in the axial direction A and thereby expands in the radial direction. According to Fig. 4, the radially inwardly projecting pressure bead 56 in the connector arrangement 2 presses against the shell surface 30 of the electric cable 8 in the compressed state 16 and prevents fluids from entering the area between the cable 8 and the cable sealing plug 1 in the axial direction A.

In addition, the compression seal 14 may have a radially outwardly projecting pressure bead 58 which, at least in the compressed state 16, is pressed against an inner wall 60 of the housing 6 delimiting the cable opening 7 in the radial direction and thus seals off an area between the housing 6 and the cable sealing plug 1. For this purpose, the housing 6 can have a sealing receptacle 62 in which at least the radially outwardly projecting pressure bead 58 is arranged in the blocking position 24.

The outwardly projecting pressure bead 58 can overlap at least in sections in the radial direction with the inwardly projecting pressure bead 56 and/or the compression ring 42 so that the radially outwardly projecting pressure bead 58 can be supported by the compression ring 42 and/or the inwardly projecting pressure bead 56.

If fluids are to be prevented from entering the sealing receptacle 62, the compression seal 14 may, in an optional configuration, be provided with a radially protruding collar 64 which, in the blocking position 24, is pressed in the axial direction A against a transition 66 between a blocking region 68 adapted to receive the locking part 20 and the sealing receptacle 62.

In particular, the collar 64 may overlap with the shoulder 50 in the radial direction so that the collar 64 is protected against being pushed in in the radial direction.

In order to keep the cable sealing plug 1 as compact as possible, a shell surface 70 is formed at least in sections by the locking part 20 and the compression seal 14. This allows the shell surface 70 to be used for the specific tasks of the compression seal 14 or the locking part 20. As previously described, a seal between the cable sealing plug 1 and the housing 6 can be realized via the compression seal 14, whereby a further, separate sealing element intended for this task can be dispensed with.

In the case of the locking part 20, it is particularly preferred if the locking system 22 is located on the part of the shell surface 70 formed by the locking part 20.

In particular, electric cables 8 with high predetermined cable diameters 10 may require high sealing forces which make it difficult to transfer the compression seal 14 to the compressed state 16. To facilitate assembly of the cable sealing plug 1, the locking part 20 may be provided with a sliding guide 72 via which the rotational movement of the locking part 20 is converted into an axial movement of the cable sealing plug 1.

This can be realized, for example, by a screw connection which, however, has the disadvantage that the blocking position 24 cannot be defined exactly, since the final screw position depends on the person assembling it. An exact definition of the blocking position 24 can be achieved, for example, with a bayonet lock 74, in which latching only takes place in the blocking position 24. For this purpose, the sliding guide 72 can be adapted as a bayonet guide 76 and the complementary locking system 78 as a radially projecting slide block 80, which is arranged in the blocking region 68 of the cable opening 7.

For uniform stress on the locking part, a plurality of bayonet guides 76 spaced apart in the circumferential direction may be provided to simultaneously receive and lock with a respective slide block 80 in the blocking position 24.

For better handling of the cable sealing plug 1, the locking part 20 can be provided with at least one handling area 84 on its end face 82 facing away from the compression seal 14. This handling area can be configured to facilitate engagement by hand or a tool and, in this exemplary configuration, is configured as a depression.

The handling area 84 may also serve to provide directional guidance and may increase along a blocking direction in an axial and/or radial direction.

The electric cable 8 can have at least one electric conductor 86 sheathed with an insulation 32 or also a conductor bundle. A cable shielding 88 can be arranged between insulation 32 and electric conductor 86, which is exposed for shield contacting of the connector 4 and is inserted into an annular pocket 90.

In particular, the annular pocket 90 can be arranged radially inwards on an inner wall 92 delimiting the cable opening 7 in the axial direction, which facilitates insertion of the exposed part of the cable shielding 88. The annular pocket 90 may, for example, contain a shielding plate (not shown) or the inner wall 92 of the housing may be configured as a shielding element.

For improving the vibration resistance of the shield contact, the compression ring 42 may have an extension 94 projecting in the axial direction A away from the compression seal 14 and projecting into the annular pocket 90 at least in the blocking position 24 to press the cable shielding 88 against the housing 6.

In Fig. 4, it is shown that in the blocking position 24, the compression seal 14 is in the compressed state, which allows the compression of the compression seal 14 to be maintained at a constant level.

In this case, the compression ring 42 is supported against the inner wall 92 and presses against the compression seal 14 with the pressing force 44 essentially parallel to the axial direction A.

Furthermore, it can be seen that in this exemplary configuration the entire cable sealing plug 1 is located in the blocking position 24 in the housing 6. Thus, the cable sealing plug 1 does not protrude from the cable opening 7, which preferably does not increase the dimensions of the connector 4 in the axial direction. In particular, the cable sealing plug 1 can terminate with one end of the housing 6, whereby it can be prevented that it is necessary to reach into the cable opening 7 for actuating the cable sealing plug 1.

### Reference signs

- 1: cable sealing plug
- 2: connector arrangement
- 4: connector
- 6: housing
- 7: cable opening
- 8: electric cable
- 10: predetermined cable diameter
- 12: cable pass through opening
- 14: compression seal
- 16: compressed state
- 18: inner diameter
- 20: locking part
- 22: locking system
- 24: blocking position
- 26: unitary component
- 28: relaxed state
- 30: shell surface
- 32: insulation
- 34: sealing force
- 36: injection molded part
- 38: axial end
- 40: axial end
- 42: compression ring
- 44: pressing force
- 46: pressing force
- 48: surface
- 50: shoulder
- 52: pressing surface
- 54: pressing surface
- 56: radially inwardly projecting pressure bead
- 58: radially outwardly projecting pressure bead
- 60: inner wall
- 62: sealing receptacle
- 64: collar
- 66: transition
- 68: blocking region
- 70: shell surface
- 72: sliding guide
- 74: bayonet lock
- 76: bayonet guide
- 78: complementary locking system
- 80: slide block
- 82: end face
- 84: handling area
- 86: electric conductor
- 88: cable shielding
- 90: annular pocket
- 92: inner wall
- 94: extension

- A: axial direction

## Claims

1. Cable sealing plug (1) for sealing a cable opening (7) of an electric connector (4) configured for connecting an electric cable (8) with a predetermined cable diameter (10), wherein the cable sealing plug (1) comprises
- a cable pass through opening (12) for the electric cable (8) penetrating the cable sealing plug (1) in the axial direction (A);
- a compression seal (14) which extends around the cable pass through opening (12) and is transferable to a compressed state (16) in which an inner diameter (18) of the compression seal (14) is smaller than the predetermined cable diameter (10); and
- a locking part (20) with a locking system (22) which is configured to fix the cable sealing plug (1) to the connector (4),
and wherein the locking part (20) and compression seal (14) are united to form one component (26).

2. Cable sealing plug (1) according to claim 1, wherein a compression seal (42) is arranged at an axial end (40) of the cable sealing plug (1) opposite the locking part (20), and wherein the compression seal (14) is located between the locking part (20) and the compression seal (42).

3. A cable sealing plug (1) according to claim 1 or 2, wherein at least one axially projecting shoulder (50) is located on a surface (48) where the locking part (20) and the compression seal (14) are connected to each other.

4. Cable sealing plug (1) according to one of claims 1 to 3, wherein the compression seal (14) has at least one radially projecting pressure bead (56, 58) on its outer and/or inner side.

5. Cable sealing plug (1) according to claim 4, wherein the cable sealing plug (1) has at least one radially inwardly projecting pressure bead (56), which abuts directly against the locking part (20) in the axial direction (A).

6. Cable sealing plug (1) according to one of claims 1 to 5, wherein a shell surface (70) of the cable sealing plug (1) is formed at least in sections by the locking part (20) and the compression seal (14).

7. Cable sealing plug (1) according to one of claims 1 to 6, wherein the locking system (22) is arranged on a shell surface (70) of the locking part (20).

8. Cable sealing plug (1) according to one of claims 1 to 7, wherein the locking part (20) is provided with at least one handling area (84) on its end face (82) facing away from the compression seal (14).

9. Cable sealing plug (1) according to claim 8, wherein the handling area (84) increases axially and/or radially along a circumferential direction.

10. Cable sealing plug (1) according to one of claims 2 to 9, wherein the compression ring (42) is formed of an electrically conductive material.

11. Cable sealing plug (1) according to one of claims 2 to 10, wherein the compression ring (42) is united with the compression seal (14) and the locking part (20) to form the component (26).

12. Cable sealing plug (1) according to one of claims 2 to 11, wherein the compression ring (42) has an extension (94) projecting away from the compression seal (14) in the axial direction (A).

13. Electric connector (4) comprising a housing (6) with a cable opening (7) and a cable sealing plug (1) according to one of claims 1 to 12, wherein the housing (6) is provided with a locking device (78) complementary to the locking device (22) of the cable sealing plug (1) for fixing the cable sealing plug (1) in a blocking position (24) in the housing (6) and wherein in the blocking position (24) the compression seal (14) is pressed against an inner wall (92) of the housing (6).

14. Electric connector (4) according to claim 13, wherein in the blocking position (24) the cable sealing plug (1) is located completely in the housing (6).

15. Electric connector (4) according to claim 13 or 14, wherein the housing (6) has an annular pocket (90) into which the compression ring (42) or the compression seal (14) projects at least in sections in the blocking position (24).
